# EUROPEAN PATENT SPECIFICATION

(11) **EP 0 866 915 B1**
(45) Date of publication and mention of the grant of the patent: **13.03.2002**
(21) Application number: 96940747.7
(22) Date of filing: 11.12.1996
(51) Int. Cl.: F02C 3/14, F23C 6/04, F23C 10/00

(54) **A POWER PLANT**
KRAFTWERK
INSTALLATION DE PRODUCTION D'ENERGIE

(30) Priority: 11.12.1995 SE 9504426
(43) Date of publication of application: 30.09.1998
(73) Proprietor: ABB CARBON AB, 612 82 Finspong (SE)
(72) Inventor: BRÄNNSTRÖM, Roine, S-612 37 Finspang (SE); LÖVGREN, Anders, S-612 40 Finspang (SE); VEENHUIZEN, Dirk, S-612 34 Finspang (SE)
(74) Representative: Berglund, Stefan
(86) International application number: SE9601638
(87) International publication number: WO9721914

(56) References cited:
- EP-A- 0 656 463
- US-A- 4 896 497
- US-A- 5 161 367
- US-A- 5 255 506

## Description

### BACKGROUND OF THE INVENTION AND PRIOR ART

The present invention relates to a power plant according to the precharacterizing portion of claim 1.

The invention will now be discussed and elucidated in different applications in connection to a pressurized, fluidized bed, a so called PFBC-power plant (pressurized fluidized bed combustion). However, the invention is not limited to such applications, but can be used in all sorts of power plants, for instance in connection to different types of gas turbine plants. By combustible material is meant fuels that can burn, for example pit coal, brown coal, peat, biofuel, oil shale, pet coal, waste, oils, hydrogen gas and other gases, etc.

In a conventional PFBC-power plant the bed is supplied with combustion air in the form of compressed air from the pressure vessel which surrounds a combustion chamber in which the fluidized bed is kept, via fluidizing nozzles beneath the bed. The combustion gases that are produced during the combustion process pass a freeboard above the bed surface, whereafter they are purified and guided to a gas turbine. The combustion gases drive the gas turbine which in its turn drives an electric generator on one hand and a compressor which supplies a pressure vessel with compressed air on the other hand. In the bed the fuel is combusted at a temperature in the range of 850°C. For a production of steam, a steam generator in the shape of a set of tubes is positioned in the bed. Energy is taken from the bed via the steam turbines to which the steam is led in a steam system. At maximum load the whole set of tubes is located within the bed. A PFBC-plant is characterized by a small plant volume in relation to utilized output in comparison to other types of plants where fuel is combusted in a fluidized bed under atmospheric conditions. The efficiency of a PFBC-plant is also high. Furthermore, the combustion at a PFBC-plant takes place under favourable conditions from an environmental and economical point of view.

A problem which has burdened the PFBC-technique and inhibited the obtaining of a really high efficiency is that the upper temperature limits at which combustion of for instance coal takes place in a fluidized bed, normally amounts to 850°-950°C depending on the coal quality. This means that the driving gas for the gas turbine included in the PFBC-power plant has a temperature which is approximately as high as the temperature in the fluidized bed. As the turbine effect increases strongly with increased temperature of the driving gas, a higher gas temperature is requested, up to 1200°-1500 °C to make the output from the gas turbine part of the plant reach an optimal level. In order to remedy this weakness it has been proposed to increase the temperature of the gases leaving the PFBC-combustion chamber by means of a topping combustion chamber in which a fuel is combusted. As the driving gases pass the topping combustion chamber, the temperature can be increased before they are supplied to the gas turbine.

Such a technique is known through SE-B 458 955. Therein there is also described how fuel to the topping combustion chamber is produced by means of a gasifying reactor, in which coal at below stoichiometric conditions is gasified during the production of combustible gas which is supplied to the topping combustion chamber. The gasifying reactor shown forms an integrated part of a PFBC-combustion chamber and is thus located inside the vessel that encloses the PFBC-combustion chamber. It is desirable that the flow of gas which such a gasifying reactor delivers, has a higher pressure than the flow of combustion gas that arrives to the topping combustion chamber, so that they can be supplied to the topping combustion chamber. Now, it has turned out to be difficult to regulate the combustion that takes place in the topping combustion chamber without losses.

JP-A-5/87315 shows a power plant that comprises a gasifying reactor with a fluidized bed, a combustion chamber with a fluidized bed, and a topping combustion chamber. The exhaust gases from the gasifier and the combustion chamber are purified and supplied to the topping combustion chamber, where a combustion takes place. The combustion gases from the topping combustion chamber drive a gas turbine which in its turn drives a generator and a compressor that compresses the air which is supplied to the gasifying reactor, combustion chamber and topping combustion chamber. The combustion air supplied to the topping combustion chamber is heat exchanged by means of air tubes arranged in the fluidized bed of the combustion chamber.

JP-A-5/93513 shows a power plant with a gasifying reactor for the production of a combustible gas. The combustible gas is cleaned and supplied to a topping combustion chamber. The solid rest products formed in the gasifier are supplied to a combustion chamber that comprises a fluidized bed, where they are combusted. Also the combustion gases from the combustion chamber are purified and supplied to the topping combustion chamber. The topping combustion chamber is also supplied with oxygen from outside, and a combustion takes place, the combustion gases formed in the topping combustion chamber being used to drive a gas turbine.

US-A-5 161 367, EP-A-656 463 and US-A-4 896 497 disclose a coal fired gas turbine system with integral topping combustor. The system includes a combustion chamber for the combustion of coal in a pressurised fluidised bed. A gas turbine is driven by the combustion gases. The topping combustor is arranged to increase the temperature of the combustion gases to a temperature suitable for the gas turbine device. A gasifier is arranged to produce a combustible gas to be burned in the topping combustor. Conduit members are provided to supply air to the gasifier and include a compressor which is driven by a driving device and arranged to compress the air supplied to the gasifier.

### SUMMARY OF THE INVENTION

The object of the present invention is to remedy the above problems and more precisely to find ways of regulating the flow of the oxygen-containing gas supplied to the gasifier, in order to in that way adapt the amount of combustible gas produced to the need in the topping combustor.

This object is obtained by means of the initially defined power plant which is characterized in that the conduit member comprises a member to accomplish a rotation speed regulation of the driving device of the compressor for regulation of the flow of said oxygen-containing gas which is supplied to the gasifier to a desired level. Such a flow regulating member makes it possible to adapt the amount of the combustible gas produced to the need in the topping combustion chamber.

Such a flow regulation is simple to accomplish and results in small losses. Thereby the driving device may comprise an electric motor.

According to another advantageous embodiment, the compressor comprises a rotor with blades, and the regulation member is arranged to regulate the flow through the compressor. Thereby the regulation member may comprise at least one rotatable guide-blade row which is arranged upstream of one or more rotor steps of the compressor. Also such an embodiment results in small losses.

According to another embodiment, the gas turbine device comprises at least one turbine and a compressor which is driven by the turbine and which is arranged to compress the oxygen-containing gas needed for the combustion in the combustion chamber before it is supplied to the combustion chamber. Thereby, the compressor driven by the turbine may, advantageously, be arranged to compress an oxygen-containing gas, needed for the combustion in the topping combustor, before it is supplied to the topping combustor. According to an advantageous embodiment, and to accomplish a first pressure increase of the oxygen containing gas supplied to the gasifier, the conduit member may be connected to the outlet side of the compressor driven by the turbine and arranged to permit a supply of said oxygen-containing gas to the gasifier, which gas has been compressed in the compressor driven by the turbine.

Advantageous, further embodiments of the inventive power plant are defined in the dependent patent claims 11-14. Thereby it shall be particularly mentioned that the topping combustor may comprise a topping combustion chamber arranged between the combustion chamber and the gas turbine. Furthermore, the gas turbine device may comprise at least one first turbine and a second turbine, while the topping combustor also may comprise a reheater which is arranged between the first and the second turbine and which is arranged to increase the temperature of the combustion gases that have passed the first turbine before they are led into the second turbine.

### BRIEF DESCRIPTION OF THE DRAWING

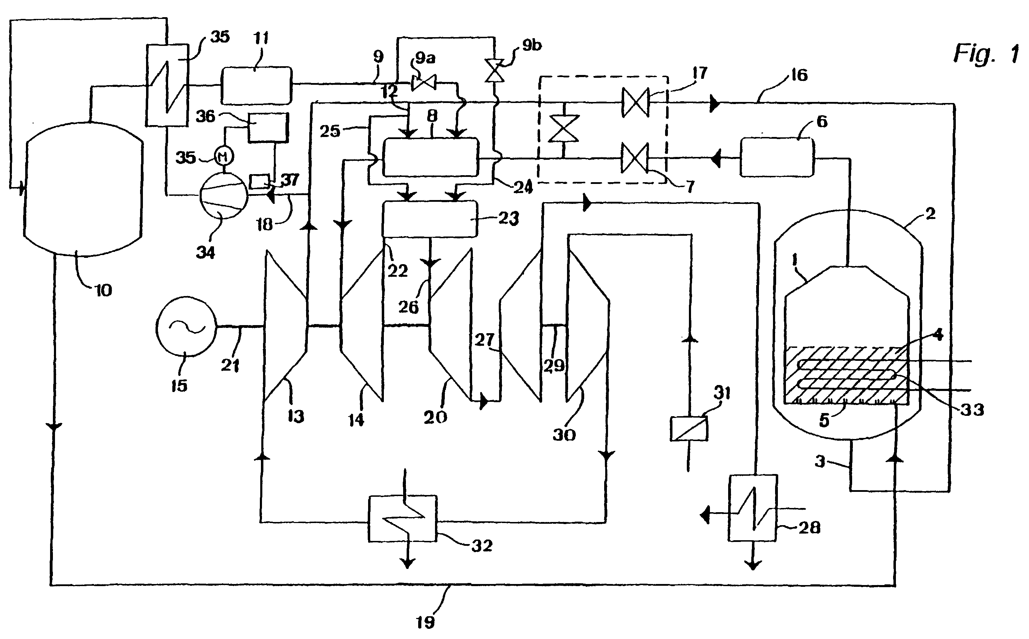

The invention will now be explained more in detail by means of different embodiments, defined by way of example, one of which is illustrated on the enclosed drawing, the only figure 1 of which schematically shows a PFBC-power plant with a combined gas and steam cycle (the latter not shown).

### DETAILED DESCRIPTION OF DIFFERENT EMBODIMENTS

A PFBC-power plant, that is a plant for the com-bustion of a particulate fuel in a pressurized, fluidized bed, is schematically shown in fig 1. The plant comprises a combustion chamber 1 which is housed in a vessel 2 which may have a volume in the range of 10⁴m³ and which can be pressurized up to, for instance, approximately 16 bar. Compressed oxygen-containing gas 3, air in the example shown, for a pressurization of the combustion chamber 1 and for fluidization of a bed 4 in the combustion chamber 1 is supplied to the pressure vessel 2. The compressed air is supplied to the combustion chamber 1 via schematically indicated fluidizing nozzles 5 which are arranged at the bottom of the combustion chamber 1 in order to fluidize the bed 4 enclosed in the combustion chamber 1. The bed 4 is constituted by bed material, granular absorbent and a particulate fuel, preferably crushed coal which is combusted in the fluidizing air supplied to the bed 4. The combustion gases from the bed 4 are then guided to a topping combustion chamber 8, via a purification arrangement 6 which, in the example, is constituted by a high temperature filter which may be of ceramic type and which is adapted for high pressures, and an intercept valve 7. To the topping combustion chamber 8 a combustible gas is also conducted via a conduit 9 from a gasifying reactor 10 of a known type via a further high temperature filter 11. The gasifying reactor 10 is free-standing, that is arranged such that it is departed from the combustion chamber 1 and outside the pressure vessel 2. The flow of combustible gas to the topping combustion chamber 8 is regulated by means of the regulation valve 9a. In the topping combustion chamber the combustible gases are combusted in connection to a supply of compressed air from a high pressure compressor 13 via the conduit 12, through the action of a burner, not shown, and is mixed with the combustion gases from the combustion chamber 1 in order to increase the temperature thereof, such that the gases leaving the topping combustion chamber 8 presents a temperature of approximately 1200°-1500 C which makes them well suited as driving gas for driving a first gas turbine 14 in the shape of a high pressure turbine. By means of the topping combustion chamber 8 the temperature of said combustion gases has accordingly been increased from approximately 850°-950°C to approximately 1200°-1500°C. The high pressure turbine 14 and the high pressure compressor 13 are arranged at the same shaft as a generator 15 from which useful electric energy can be extracted. The high pressure compressor 13 also delivers compressed air to the PFBC-combustion chamber 1 via the conduit 16 from which the conduit 12 is branched off. Thereby an intercept valve 17 is arranged between the high pressure compressor and the combustion chamber 1. The high pressure compressor 13 also delivers air via the conduit 18 for the gasification in the gasifying reactor 10. The rest fuel which is formed in the gasifying reactor 10 during the creation of the combustible gas may be supplied to the bed 4 in the combustion chamber 1 via a fuel conduit 19.

The PFBC-power plant shown in the figure is of an advanced sort, as it presents a further gas turbine 20, in the shape of an intermediate pressure turbine, which is arranged on the same shaft 21 as the high pressure turbine 14 and the high pressure compressor 13. The gas which is expanded and given a lower temperature in the high pressure turbine 14 is conducted via a conduit 22 to a reheater 23 which comprises a so called reheat combustion chamber or reheating combustion chamber. The reheat combustion chamber 23 obtains a flow of said combustible gases, which flow is regulated by means of the regulation valve 9b and originates from the gasifying reactor 10, and compressed air from the high pressure 13 in the same way as the topping combustion chamber 8, which is shown in fig 1, through the conduits 24 and 25 respectively, whereby these combustible gases there are combusted through a burner, not shown, and the hot gases thus produced are mixed with the combustion gases from the high pressure turbine 14 in order to once again increase the temperature thereof before they are further conducted through the conduit 26 to the intermediate pressure turbine 20. In this way the output extracted from the intermediate pressure turbine 20 may be considerably increased.

The combustion gases expanded in the intermediate pressure turbine 20 are led to a low pressure turbine 27. The combustion gases that leave the low pressure turbine 27 still contain energy which can be taken advantage of in an economizer 28. The low pressure turbine 27 is arranged on a shaft 29 on which also a low pressure compressor 30 is arranged. The low pressure compressor 13 is supplied with atmospheric air through a filter 31. The low pressure compressor 30 is thus driven by the low pressure turbine 27 and from its outlet it supplies the high pressure compressor 13 with air that has been compressed in a first step. The inlet of the low pressure turbine 27 is preferably provided with a flow regulating device, not shown, in the shape of controllable guide-blades on a guide-blade row, such that the rotation speed of the second shaft can be varied. Between the low pressure compressor 30 and the high pressure compressor 13 an intercooler 32 is arranged in order to lower the temperature of the air which is supplied to the inlet of the high pressure compressor 13.

Furthermore, the power plant presents a steam turbine side which is not shown here but indicated by means of a set of tubes 33, which is submersed in the fluidized bed 4 and in which water is circulated, steamed and superheated through heat exchange between the tubes and the bed material in order to absorb heat generated by the combustion carried out in the bed 4.

The conduit 18 for the supply of compressed air to the gasifying reactor 10, and which comes from the high pressure compressor 13, comprises a compressor device 34, which in the example shown is constituted by a so called booster-compressor. This one is preferably driven by an electric motor 35, but may also be driven by means of a steam turbine which is supplied with steam from the set of tubes 33. By means of this compressor 34 the gas pressure of the air which is supplied to the gasifying reactor 10 can be further increased when it is desired that the gas flow which the gasifying reactor 10 delivers has a higher pressure than the flow of combustion gas that arrives to the topping combustion chamber 8 and/or the reheating combustion chamber 23. Thereby, the combustible gases can be supplied to the topping combustion chamber 8 and/or reheating combustion chamber 23 in a simple way in every given pressure situation. In the gasifying reactor 10 a liquid or solid fuel is gasified, in this example particulate coal, which, at a below stoichiometric process, in a known way generates combustible gases. The reason for arranging a free-standing gasifier in this way, which gasifier operates at higher pressures than the PFBC-bed 4, is that it is simply necessary to have a higher pressure of the gas in the gasifying reactor 10 than the pressure in the combustion chambers 8, 23 to be able to regulate the flow of fuel and distribute the flow of fuel evenly in these combustion chambers. Accordingly, a pressure of approximately 26 bar can be accomplished in the gasifying reactor at a pressure of possibly 16 bar in the PFBC-combustion chamber 1. However, to be able to more precisely regulate the air flow to the gasifying reactor 10, the motor 35 may be connected to a schematically shown control device 36 for regulation of the rotational speed of the motor. It is also possible, as an alternative or supplement to the rotation speed regulation, to arrange a schematically shown guide-blade device 37, for example in the shape of guide-blades on a guide-blade row, which guide-blades are controllable by means of a manoeuvring member and located within or in front of the compressor 34, that is upstream of one or more rotor steps of the compressor 34. In that way it is possible to precisely regulate the size of the air flow through the compressor 34, and thus the amount of air which is supplied to the gasifying reactor 10. The manoeuvring member may thereby be connected to the control device 36.

By means of the inventive arrangement it is thus possible to rapidly increase the pressure in the gasifying reactor 10 by means of the rotation speed-regulated compressor 34, which results in a more important flow of combustible gases to the topping combustion chamber 8 and the reheating combustion chamber 23. Thereby, a more intensive combustion is obtained in these chambers 8, 23 and the temperature of the combustion gases can be rapidly increased, which makes it possible to receive a higher output from the plant. By decreasing the flow by means of the rotation speed regulation 35, 36 or the guide-blade device 37 the pressure in the gasifying reactor 10 can be rapidly decreased and thus the plant can be rapidly adapted to a lower need of output in a corresponding way.

Furthermore, the conduit 18 coming from the high pressure compressor 13 may comprise a heat exchanger 38 arranged downstream of the compressor device 34. The conduit 9 which comes from the gasifying reactor 10 also extends through the heat exchanger 38. Accordingly, this means that the relatively cool compressed air which is supplied to the gasifying reactor 10 will be heat exchanged with the very hot combustible gas (800°-1000°C) that leaves the gasifying reactor 10. Accordingly, the temperature of the gas which is led through the heat exchanger 38 can be decreased to a significantly lower temperature of below 600°C, which means that dust particles that are in a melted condition at the higher temperature will be in a solid condition after the heat exchanger 38. Thereby the risk that these gases and melted gas particles will stop up the high temperature filter 11 is substantially reduced. Furthermore, the filter 11 may be manufactured by conventional technique, that is it is not necessary to use sintered ceramic hot gas filters as the temperature of the combustible gas has been lowered. A further advantage of this temperature decrease is that the regulation valves 9a, 9b may be of a conventional structure, that is, it is not necessary with any advanced cooling through steaming of water and superheating of the steam in order to secure the function of these regulation valves 9a, 9b. Such cooling is very expensive and demands an extensive regulation and security equipment.

The invention is not in any way delimited to the embodiment described above, but a plurality of possibilities of modifications thereof are possible within the frame of the following patent claims and should be evident for a man skilled in the art without departing from the basic idea of the invention.

For example, it would be possible that the plant only presents two gas turbines, that is that the intermediate pressure turbine shown in fig 1 is excluded. Thereby, the reheating combustion chamber 23 rises the temperature of the combustion gases which come from the high pressure turbine 14 and is to arrive at the low pressure turbine 27, which, in such a case, will receive gases with higher pressure than described above and could be named intermediate pressure turbine.

Nor is it necessary, but advantageous, that the inventive PFBC-plant presents a topping combustion chamber 8, even though the advantages with the reheating combustion chamber 23 will do justice to themselves only first when there is such a topping combustion chamber 8.

It is of course also possible, in the case of more than 2 gas turbines, to arrange a reheating combustion chamber between the second and third gas turbine in the path of the combustion gases if desired.

The air coming from the compressor 34 does not need to be guided via the heat exchanger 38, but can be directly supplied to the gasifying reactor 10.

Nor is it necessary to take the air arriving to the free-standing gasifying reactor 10 from the high pressure compressor 13, but it can be taken directly from the atmosphere. Thereby the inventive regulatable compressor 34 may compress the atmosphere air in one or more steps to a desired pressure.

## Claims

1. A power plant comprising a combustion chamber (1) in which combustion of a combustible material is intended to take place while forming hot combustion gases, a gas turbine device (14, 20, 27) which is arranged to be driven by the combustion gases, a topping combustor (8, 23) which is arranged to increase the temperature of the combustion gases to a temperature suitable for the gas turbine device, a gasifier (10) which is arranged to produce a combustible gas for combustion in the topping combustor in order to accomplish said increase of temperature, and conduit members (18) provided to supply an oxygen-containing gas, necessary for the gasification, to the gasifier, the conduit members and comprising a compressor (34) which is driven by a driving device and which is arranged to compress said oxygen-containing gas which is supplied to the gasifier (10), **characterized in that** the conduit member comprises a member (35, 36, 37) arranged to accomplish a rotation speed regulation of the driving device of the compressor for regulation of the flow of said oxygen-containing gas which is supplied to the gasifier (10) to a desired level.

2. A power plant according to claim 1, **characterized in that** the driving device comprises an electric motor (35).

3. A power plant according to any of claims 1 and 2, **characterized in that** the compressor (34) comprises a rotor with blades and that the regulation member (37) is arranged to regulate the flow through the compressor.

4. A power plant according to any of claims 1 to 3, **characterized in that** the regulation member (37) comprises at least one rotatable guide-blade row which is arranged upstream of one or more rotor steps of the compressor (34).

5. A power plant according to any of the preceding claims, **characterized in that** the gas turbine device comprises at least one turbine (14, 20, 27) and a compressor (30, 13) driven by the turbine and arranged to compress the oxygen-containing gas which is necessary for the combustion in the combustion chamber (1) before it is supplied to the combustion chamber.

6. A power plant according to claim 5, **characterized in that** the compressor 13 driven by the turbine (14, 20) is arranged to compress an oxygen-containing gas needed for the combustion in the topping combustor (8, 23) before it is supplied to the topping combustor.

7. A power plant according to claim 5 or 6, **characterized in that** the conduit member (18) is connected to the outlet side of the compressor (13) which is driven by the turbine (14, 20), and is arranged to permit a supply of said oxygen-containing gas, which has been compressed in the compressor driven by the turbine, to the gasifier (10).

8. A power plant according to any of the preceding claims, **characterized in that** the topping combustor comprises a topping combustion chamber (8) arranged between the combustion chamber (1) and the gas turbine device (14, 20).

9. A power plant according to any of the preceding claims, **characterized in that** the gas turbine device comprises at least one first turbine (14) and a second turbine (20, 27) and that the topping combustor comprises a reheater (23) which is arranged between the first and the second turbine and which is arranged to increase the temperature of the combustion gases that have passed the first turbine (14) before they are guided into the second turbine (20, 27).

10. A power plant according to any of the preceding claims, **characterized in that** the combustion chamber (1) is of a type which comprises a fluidized bed (4).

11. A power plant according to claim 10, **characterized in that** the fluidized bed (4) is pressurized.

## Patentansprüche

1. Kraftwerk, mit einer Verbrennungskammer (1), in der eine Verbrennung von brennfähigem Material während der Bildung heißer Verbrennungsgase stattfinden soll, einer Gasturbineneinrichtung (14, 20, 27), die von den Verbrennungsgasen angetrieben werden soll, einem Topping-Verbrenner (8, 23), ausgebildet zur Steigerung der Temperatur der Verbrennungsgase auf eine sich für die Gasturbineneinrichtung geeignete Temperatur, einem Vergaser (10), ausgebildet zum Produzieren eines brennbaren Gases für die Verbrennung in dem Topping-Verbrenner, um die Temperaturerhöhung vorzunehmen, und Leitungselementen (18) zum Zuführen eines sauerstoffhaltigen, für die Vergasung benötigten Gases, wobei die Leitungselemente einen Kompressor (34) aufweisen, der von einer Antriebseinrichtung angetrieben wird und dazu ausgebildet ist, das sauerstoffhaltige, dem Vergaser (10) zugeführte Gas zu komprimieren, **dadurch gekennzeichnet, daß** das Leitungselement ein Element (35, 36, 37) aufweist, welches dazu ausgebildet ist, eine Drehzahlregulierung der Antriebsregulierung des Kompressors vorzunehmen, um den Strom des dem Vergaser (10) zugeführten sauerstoffhaltigen Gases auf einen Sollwert zu regulieren.

2. Kraftwerk nach Anspruch 1, **dadurch gekennzeichnet, daß** die Antriebseinrichtung einen Elektromotor (35) aufweist.

3. Kraftwerk nach einem der Ansprüche 1 und 2, **dadurch gekennzeichnet, daß** der Kompressor (34) einen Rotor mit Schaufeln aufweist, und daß das Regulierelement (37) ausgebildet ist zum Regulieren des Durchsatzes durch den Kompressor.

4. Kraftwerk nach einem der Ansprüche 1 bis 3, **dadurch gekennzeichnet, daß** das Regulierelement (37) mindestens eine drehbare Leitschaufelreihe besitzt, die stromaufwärts von einer oder mehreren Rotorstufen des Kompressors (34) angeordnet ist.

5. Kraftwerk nach einem der vorhergehenden Ansprüche, **dadurch gekennzeichnet, daß** die Gasturbineneinrichtung mindestens eine Turbine (14, 20, 27) und einen Kompressor (30, 13), der von der Turbine angetrieben und dazu ausgebildet ist, das zur Verbrennung in der Verbrennungskammer (1) benötigte sauerstoffhaltige Gas vor der Zufuhr zu der Verbrennungskammer zu komprimieren, aufweist.

6. Kraftwerk nach Anspruch 5, **dadurch gekennzeichnet, daß** der von der Turbine (14, 20) angetriebene Kompressor (13) dazu ausgebildet ist, ein sauerstoffhaltiges Gas zu komprimieren, das für die Verbrennung in dem Topping-Verbrenner (8, 23) benötigt wird, bevor es dem Topping-Verbrenner zugeleitet wird.

7. Kraftwerk nach Anspruch 5 oder 6, **dadurch gekennzeichnet, daß** das Leitungselement (18) an die Auslaßseite des Kompressors (13) angeschlossen ist, der von der Turbine (14, 20) angetrieben wird, und dazu ausgebildet ist, eine Zufuhr des sauerstoffhaltigen Gases, das in dem von der Turbine angetriebenen Kompressor komprimiert wird, zu dem Vergaser (10) zu ermöglichen.

8. Kraftwerk nach einem der vorhergehenden Ansprüche, **dadurch gekennzeichnet, daß** der Topping-Verbrenner eine Topping-Verbrennungskammer (8) aufweist, die zwischen der Verbrennungskammer (1) und der Gasturbineneinrichtung (14, 20) angeordnet ist.

9. Kraftwerk nach einem der vorhergehenden Ansprüche, **dadurch gekennzeichnet, daß** die Gasturbineneinrichtung mindestens eine erste Turbine (14) und eine zweite Turbine (20, 27) aufweist, und daß der Topping-Verbrenner einen Nachbrenner (23) aufweist, der zwischen der ersten und der zweiten Turbine angeordnet und dazu ausgebildet ist, die Temperatur der Verbrennungsgase zu erhöhen, die durch die erste Turbine (14) gelangt sind, bevor sie in die zweite Turbine (20, 27) eingeleitet werden.

10. Kraftwerk nach einem der vorhergehenden Ansprüche, **dadurch gekennzeichnet, daß** die Verbrennungskammer (1) vom Typ mit Wirbelschicht (4) ist.

11. Kraftwerk nach Anspruch 10, **dadurch gekennzeichnet, daß** die Wirbelschicht (4) unter Druck gesetzt ist.

## Revendications

1. Centrale de production d'électricité comprenant une chambre (1) de combustion dans laquelle une combustion d'une matière combustible est destinée à avoir lieu en formant des gaz chauds de combustion, un dispositif (14, 20, 27) à turbine à gaz qui est destiné à être entraîné par les gaz de combustion, un brûleur (8, 23) de tête qui est destiné à porter la température des gaz de combustion à une température qui convient pour le dispositif à turbine à gaz, un gazéificateur (10) qui est destiné à produire du combustible gazeux pour la combustion dans le brûleur de tête afin d'effectuer l'élévation de température, et des conduits (18) destinés à envoyer un gaz contenant de l'oxygène nécessaire à la gazéification au gazéificateur et comprenant un compresseur (34) qui est entraîné par un dispositif d'entraînement et qui est destiné à comprimer le gaz contenant de l'oxygène qui est envoyé au gazéificateur (10), **caractérisée en ce que** le conduit comprend un élément (35, 36, 37) destiné à effectuer une régulation de la vitesse de rotation du dispositif d'entraînement du compresseur pour réguler le courant de gaz contenant de l'oxygène qui est envoyé au gazéificateur (10) à un niveau souhaité.

2. Centrale de production d'énergie suivant la revendication 1, **caractérisée en ce que** le dispositif d'entraînement comprend un moteur (35) électrique.

3. Centrale de production d'énergie suivant l'une quelconque des revendications 1 et 2, **caractérisée en ce que** le compresseur (34) comprend un rotor à lames et **en ce que** l'élément (37) de régulation est destiné à réguler le courant passant dans le compresseur.

4. Centrale de production d'énergie suivant l'une quelconque des revendications 1 à 3, **caractérisée en ce que** l'élément (37) de régulation comprend au moins une rangée de lames (10) qui peuvent tourner et qui sont disposées en amont d'un étage rotorique ou de plusieurs étages rotoriques du compresseur (34).

5. Centrale de production d'énergie suivant l'une quelconque des revendications précédentes, **caractérisée en ce que** le dispositif à turbine à gaz comprend au moins une turbine (14, 20, 27) et un compresseur (30, 13) entraîné par la turbine et destiné à comprimer le gaz contenant de l'oxygène qui est nécessaire pour la combustion dans la chambre (1) de combustion avant qu'il soit envoyé à la chambre de combustion.

6. Centrale de production d'énergie suivant la revendication 5, **caractérisée en ce que** le compresseur (13) entraîné par la turbine (14, 20) est destiné à comprimer un gaz contenant de l'oxygène dont on a besoin pour la combustion dans le brûleur (8, 23) de tête avant qu'il soit envoyé au brûleur de tête.

7. Centrale de production d'énergie suivant la revendication 5 ou 6, **caractérisée en ce que** l'élément (18) de conduit communique avec le côté de sortie du compresseur (13) qui est entraîné par la turbine (14, 20) et est destiné à permettre d'envoyer le gaz contenant de l'oxygène, qui a été comprimé dans le compresseur entraîné par la turbine, au gazéificateur (10).

8. Centrale de production d'énergie suivant l'une quelconque des revendications précédentes, **caractérisée en ce que** le brûleur de tête comprend une chambre (8) de combustion de tête interposée entre la chambre (1) de combustion et le dispositif (14, 20) à turbine à gaz.

9. Centrale de production d'énergie suivant l'une quelconque des revendications précédentes, **caractérisée en ce que** le dispositif à turbine à gaz comprend au moins une première turbine (14) et une deuxième turbine (20, 27), et **en ce que** le brûleur de tête comprend un réchauffeur (23) qui est interposé entre la première et la deuxième turbines et qui est destiné à élever la température des gaz de combustion qui sont passés dans la première turbine (14), avant qu'ils ne soient envoyés à la deuxième turbine (20, 27).

10. Centrale de production d'énergie suivant l'une quelconque des revendications précédentes, **caractérisée en ce que** la chambre (1) de combustion est du type qui comprend un lit (4) fluidisé.

11. Centrale de production d'énergie suivant la revendication 10, **caractérisée en ce que** le lit (4) fluidisé est sous pression.
